# EUROPEAN PATENT APPLICATION

(11) **EP 4 810 707 A1**
(43) Date of publication of application: **23.09.2026**
(21) Application number: 24891209.9
(22) Date of filing: 29.10.2024
(51) Int. Cl.: D06N 3/14, B32B 5/24, B32B 27/40

(54) **LAMINATE AND SYNTHETIC LEATHER**

(30) Priority: 13.11.2023 JP 2023193111
(71) Applicant: DIC Corporation, Tokyo 174-8520 (JP)
(72) Inventor: FUJISHITA, Norie, Takaishi-shi, Osaka 592-0001 (JP); MAEDA, Ryo, Takaishi-shi, Osaka 592-0001 (JP); TETSUI, Tomohiro, Takaishi-shi, Osaka 592-0001 (JP)
(74) Representative: Kraus & Lederer PartGmbB
(86) International application number: PCT/JP2024/038517
(87) International publication number: WO 2025/105168

(57) **Abstract**

A laminate including a base material (i) and a urethane foam layer (ii), in which the urethane foam layer (ii) is in direct contact with the base material (i), the urethane foam layer (ii) contains a urethane resin (A) having a nonionic group, and a flow initiation temperature of the urethane resin (A) is higher than 130°C.

## Description

### Technical Field

The present invention relates to a laminate and a synthetic leather.

Priority is claimed on Japanese Patent Application No. 2023-193111, filed on November 13, 2023, the content of which is incorporated herein by reference.

### Background Art

The urethane resin is widely used for manufacturing a synthetic leather including an artificial leather because of its mechanical strength and feel. In the applications of the synthetic leather, a solvent-based urethane resin containing N,N-dimethylformamide (DMF) has been mainstream so far. However, in the background of the DMF regulation in Europe, the strengthening of the VOC emission regulation in China and Taiwan, the DMF regulation by major apparel manufacturers, and the like, there is a demand for the removal of DMF from the urethane resin composition for each layer constituting the synthetic leather.

Among these, a water-based urethane (PUD) in which a urethane resin is dispersed in water is being studied as a substitute raw material for an intermediate porous layer formed by wet coagulation of a solvent-based urethane resin in the related art.

For example, PTL 1 discloses a composition for forming a foam body, the composition containing (A) a first self-emulsifying aqueous polyurethane resin having at least one hydrophilic functional group selected from the group consisting of a sulfo group and a sulfonate group, (B) a second self-emulsifying aqueous polyurethane resin having at least one hydrophilic functional group selected from the group consisting of a carboxy group and a carboxylate group, (C) a crosslinking agent, (D) a foaming agent, (E) a thickener, and (F) water, and a leather material including a foamed resin layer formed of a foamed cured product of the composition for forming a foam body.

However, in the synthetic leather in the related art as described in PTL 1, an adhesive layer is required between a base material and a urethane foam layer. Therefore, aging is required for a relatively long period of time, which causes a problem in productivity.

In addition, in recent years, there has been a demand for good processability in which, while having a soft feel, a pattern of unevenness on the surface of the synthetic leather is more clearly visible in a case of being subjected to embossing treatment, but there has been no product that satisfies the increasingly high demand characteristics in the future, and there has been no product that satisfies the recent market demand.

Therefore, there has been a demand for a laminate having immediate peelability, a soft feel, and good processability, and a synthetic leather including the laminate.

### Citation List

### Patent Literature

PTL 1: JP-A-2020-109152

### Summary of Invention

### Technical Problem

An object of the present invention is to provide a laminate having immediate peelability, a soft feel, and good processability, and a synthetic leather including the laminate.

### Solution to Problem

As a result of intensive studies to achieve the above-described object, the present inventors have found that, by using a urethane resin having a flow initiation temperature exceeding a specific temperature and having a specific structure, and adopting a configuration in which a base material (i) and a urethane foam layer (ii) are in direct contact with each other, it is possible to produce a laminate having immediate peelability, a soft feel, and good processability, thereby completing the present invention.

That is, the present invention has the following aspects.
[1] A laminate including a base material (i) and a urethane foam layer (ii), in which the urethane foam layer (ii) is in direct contact with the base material (i), the urethane foam layer (ii) contains a urethane resin (A) having a nonionic group, and a flow initiation temperature of the urethane resin (A) is higher than 130°C.
[2] The laminate according to [1], in which the flow initiation temperature of the urethane resin (A) is 150°C or higher.
[3] The laminate according to [1] or [2], in which the urethane resin (A) is a urethane resin using, as raw materials, a polyisocyanate and one or more polyols selected from the group consisting of a polyether polyol, a polycarbonate polyol, and a polyester polyol.
[4] The laminate according to any one of [1] to [3], in which the urethane foam layer (ii) further contains a surfactant.
[5] The laminate according to [4], in which the surfactant is a long-chain carboxylate.
[6] The laminate according to any one of [1] to [5], in which a dry density of the urethane foam layer (ii) is 200 to 1,000 kg/m³.
[7] A synthetic leather including: the laminate according to any one of [1] to [6].

### Advantageous Effects of Invention

According to the present invention, it is possible to provide a laminate having immediate peelability, a soft feel, and good processability, and a synthetic leather including the laminate.

### Brief Description of Drawings

[FIG. 1] FIG. 1 is an SEM image of a laminate of Example 1.
[FIG. 2] FIG. 2 is an SEM image of a laminate of Comparative Example 2.

### Description of Embodiments

### (Laminate)

The laminate of the present embodiment includes a base material (i) and a urethane foam layer (ii).

In the laminate of the present embodiment, the urethane foam layer (ii) is in direct contact with the base material (i). That is, the laminate of the present embodiment does not have an adhesive layer between the base material (i) and the urethane foam layer (ii).

### <Base Material (i)>

As the base material (i), for example, a fibrous base material such as a nonwoven fabric, a woven fabric, or a knitted fabric made of polyester fibers, polyethylene fibers, nylon fibers, acrylic fibers, polyurethane fibers, acetate fibers, rayon fibers, polylactic acid fibers, cotton, hemp, silk, wool, glass fibers, carbon fibers, or blended fibers thereof; a material obtained by impregnating the nonwoven fabric with a resin such as a polyurethane resin; a material obtained by further providing the nonwoven fabric with a porous layer; a resin base material such as thermoplastic urethane (TPU); and the like can be used.

### <Urethane Foam Layer (ii)>

A dry density of the urethane foam layer (ii) is preferably 200 to 1,000 kg/m³.

The dry density of the urethane foam layer (ii) is a value obtained by dividing a value obtained by subtracting a weight of the base material (i) per 10 cm square from a weight of the laminate per 10 cm square by a thickness of the urethane foam layer (ii).

The dry density of the urethane foam layer (ii) can be controlled by a foam expansion ratio. The foam expansion ratio can be controlled by a type of urethane to be used, a stirring rotation speed, a time for foaming, and the like.

A thickness of the urethane foam layer (ii) is, for example, 50 to 600 µm.

The urethane foam layer (ii) contains a urethane resin (A) having a nonionic group (hereinafter, also referred to as a "component (A)").

### <<Urethane Resin (A) Having Nonionic Group>>

The component (A) is a urethane resin having a nonionic group, and is a urethane resin which can be dispersed in water.

The component (A) has more excellent hydrolysis resistance than other urethane resins which can be dispersed in water (for example, an anionic urethane resin). In addition, since it is not necessary to add a crosslinking agent, processability is excellent.

A flow initiation temperature of the component (A) is higher than 130°C, preferably 150°C or higher, and more preferably 160°C or higher.

In a case where the flow initiation temperature of the component (A) is higher than 130°C, a peel strength is improved. In addition, in a case where the flow initiation temperature of the component (A) is equal to or higher than the above-described preferred lower limit value, the peel strength is further improved.

The upper limit value of the flow initiation temperature of the component (A) is not particularly limited, but is, for example, preferably 250°C or lower.

The flow initiation temperature of the component (A) can be controlled, for example, by appropriately adjusting a length of a molecular chain of the urethane resin. Specifically, the flow initiation temperature can be controlled by an amount of a chain extender (a3) added in a "chain extension step" described later.

The flow initiation temperature of the component (A) can be controlled, for example, by a type of a polyol (a2) which is a raw material of the urethane resin (A) described later, an amount of a chain extender (a2-1) used, and a type of a polyisocyanate (a1).

Examples of a method of adjusting the flow initiation temperature of the component (A) to be high include using, as the polyol (a2), a polyol having high crystallinity, such as a polycarbonate polyol, increasing the amount of the chain extender (a2-1) used, and using, as the polyisocyanate (a1), a polyisocyanate having high crystallinity, such as 4,4'-diphenylmethane diisocyanate and dicyclohexylmethane diisocyanate.

In addition, examples of a method of adjusting the flow initiation temperature of the component (A) to be low include using, as the polyol (a2), a polyol having low crystallinity, such as polyoxypropylene glycol, reducing the amount of the chain extender (a2-1) used, and using, as the polyisocyanate (a1), a polyisocyanate having low crystallinity, such as toluene diisocyanate or isophorone diisocyanate.

The flow initiation temperature of the component (A) is a value obtained by applying the urethane resin composition to release paper (coating thickness: 150 µm) and drying the urethane resin composition with a hot air dryer at 70°C for 4 minutes and then at 120°C for 2 minutes to obtain a dried product, and measuring the dried product using a flow tester "CFT-500A" (a die having a diameter of 1 mm and a length of 1 mm is used, a load is 98 N, and a temperature rising rate is 3 °C/min) manufactured by Shimadzu Corporation.

Specific examples of the component (A) include a urethane resin using the polyisocyanate (a1) and the polyol (a2) as raw materials.

### [Polyisocyanate (a1)]

As the polyisocyanate (a1), for example, aromatic polyisocyanates such as phenylene diisocyanate, toluene diisocyanate, diphenylmethane diisocyanate, xylylene diisocyanate, naphthalene diisocyanate, polymethylene polyphenyl polyisocyanate, and carbodiimide-modified diphenylmethane polyisocyanate; and aliphatic or alicyclic polyisocyanates such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, and norbornene diisocyanate can be used. These polyisocyanates may be used alone or in combination of two or more types thereof.

A use proportion of the polyisocyanate (a1) is preferably 5% to 60% by mass, more preferably 10% to 55% by mass, and still more preferably 15% to 50% by mass with respect to 100% by mass of the total of the polyisocyanate (a1) and the polyol (a2).

### [Polyol (a2)]

As the polyol (a2), a polyether polyol, a polyester polyol, a polyacrylic polyol, a polycarbonate polyol, a polybutadiene polyol, and the like can be used. These polyols may be used alone or in combination of two or more types thereof.

A number average molecular weight of the polyol (a2) is preferably 500 to 100,000 and more preferably 800 to 10,000 from the viewpoint of mechanical strength of a film to be obtained.

The number average molecular weight of the polyol (a2) is a value measured by a gel permeation column chromatography (GPC) method.

Among the above, as the polyol (a2), a polyether polyol (a21), a polycarbonate polyol (a22), or a polyester polyol (a23) is preferable.

### · Polyether polyol (a21)

Examples of the polyether polyol (a21) include polyethylene glycol, polypropylene glycol, polyethylene glycol-polytetramethylene glycol (block or random), polytetramethylene ether glycol, polyhexamethylene glycol, and the like. Among these, polytetramethylene ether glycol is preferable.

### · Polycarbonate polyol (a22)

Examples of a commercially available product of the polycarbonate polyol (a22) include "ETERNACOLL UH-100" (manufactured by UBE Corporation), and the like.

### · Polyester polyol (a23)

Examples of the polyester polyol (a23) include an esterification reaction product of a low-molecular-weight polyol and a polycarboxylic acid; a ring-opening polymer of a cyclic ester compound such as ε-caprolactone; a copolymer polyester of the esterification reaction product or the ring-opening polymer; and the like. Among these, a ring-opening polymer of a cyclic ester compound such as ε-caprolactone is preferable.

From the viewpoint of obtaining more excellent mechanical strength, a use proportion of the polyol (a2) is preferably 40% to 95% by mass, more preferably 45% to 90% by mass, and still more preferably 50% to 85% by mass with respect to 100% by mass of the total of the polyisocyanate (a1) and the polyol (a2).

The component (A) may be a urethane resin using the polyisocyanate (a1), the polyol (a2), the chain extender (a3), and a compound (a4) having an oxyethylene structure (excluding the compounds corresponding to (a1) to (a3)) as raw materials.

### [Chain extender (a3)]

As the chain extender (a3), a compound having a molecular weight of less than 500 (preferably in a range of 50 to 450) can be used, and specifically, a chain extender having a hydroxyl group, such as ethylene glycol, diethylene glycol, triethylene glycol, propylene glycol, dipropylene glycol, 1,3-propanediol, 1,3-butanediol, 1,4-butanediol, hexamethylene glycol, sucrose, methylene glycol, glycerin, sorbitol, bisphenol A, 4,4'-dihydroxydiphenyl, 4,4'-dihydroxydiphenyl ether, and trimethylolpropane; a chain extender having an amino group (-NH₂, -NH-, or -N(-)-), such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, and hydrazine; and the like can be used. These chain extenders may be used alone or in combination of two or more types thereof.

The molecular weight of the chain extender (a3) indicates a value calculated from a chemical formula.

From the viewpoint of easily performing chain extension even at a relatively low temperature of 30°C or lower, and suppressing energy consumption during the reaction, the viewpoint of obtaining a more excellent feel and peel strength by introducing a urea group, and the viewpoint of further facilitating an increase in the solid content of the component (A), the chain extender (a3) is preferably a chain extender having an amino group (hereinafter, also referred to as an "amine chain extender"), and it is more preferable to use an amine chain extender having a molecular weight in a range of 30 to 250.

In a case where two or more types of chain extenders (a3) are used in combination, an average value of the molecular weights of the respective chain extenders (a3) may be indicated, and the average value may be included in the above-described preferred molecular weight range.

From the viewpoint of obtaining a more excellent feel and peel strength, and viewpoint of further facilitating an increase in the solid content of the component (A), a use proportion of the chain extender (a3) is preferably 0.1% to 30% by mass and more preferably 0.5% to 10% by mass with respect to the total mass of the raw materials constituting the component (A).

### [Compound (a4) having oxyethylene structure]

As the compound (a4) having an oxyethylene structure, a polyether polyol having an oxyethylene structure, such as polyethylene glycol, polyoxyethylene-polyoxypropylene glycol, polyoxyethylene-polyoxytetramethylene glycol, and polyethylene glycol dimethyl ether, can be used. These compounds may be used alone or in combination of two or more types thereof. Among these, from the viewpoint of more easily controlling hydrophilicity, it is preferable to use polyethylene glycol and/or polyethylene glycol dimethyl ether.

From the viewpoint of obtaining a more excellent mechanical strength, a use proportion of the compound (a4) having an oxyethylene structure is preferably 0.1% to 10% by mass, more preferably 0.2% to 10% by mass, and still more preferably 0.5% to 8% by mass with respect to the total mass of the raw materials constituting the component (A).

The component (A) may be used alone or in combination of two or more types thereof.

A content of the component (A) is preferably 60% to 99% by mass, more preferably 65% to 98% by mass, and still more preferably 68% to 97% by mass with respect to the total amount of solid contents constituting the urethane foam layer (ii).

### [Method for producing urethane resin (A) having nonionic group]

Examples of the method for producing the component (A) include a method including a step of reacting the polyisocyanate (a1), the polyol (a2), and the compound (a4) having an oxyethylene structure in a solvent-free manner to obtain a urethane prepolymer (i) having an isocyanate group (hereinafter, also referred to as "prepolymer step"), a step of dispersing the urethane prepolymer (i) in water (hereinafter, also referred to as "emulsification step"), and a step of reacting the urethane prepolymer (i) dispersed in water with the chain extender (a3) to obtain the urethane resin (A) having a nonionic group (hereinafter, also referred to as "chain extension step").

### "Prepolymer step"

The prepolymer step is preferably performed in a solvent-free manner. In the related art, it is common to perform the prepolymer step in an organic solvent such as methyl ethyl ketone and acetone, but a solvent removal step of distilling off the organic solvent after the emulsification step is required, and it takes several days to produce in an actual production site. In addition, it is also difficult to completely distill off the organic solvent in the solvent removal step, and there are many cases where a small amount of the organic solvent remains, which makes it difficult to completely respond to environmental concerns. On the other hand, by producing the prepolymer in a solvent-free manner, a urethane resin not containing an organic solvent can be obtained, and the production step thereof can also be simplified.

In the prepolymer step, a molar ratio of the isocyanate group contained in the polyisocyanate (a1) to the total of the hydroxyl group contained in the polyol (a2) and the hydroxyl group and the amino group contained in the compound (a4) having an oxyethylene structure [isocyanate group/(hydroxyl group and amino group)] is preferably in a range of 1.1 to 3 and more preferably in a range of 1.2 to 2 from the viewpoint of obtaining a more excellent feel and peel strength.

The reaction in the prepolymer step is performed, for example, at 50°C to 120°C for 1 to 10 hours.

### "Emulsification step"

The emulsification step can be carried out by using, for example, a reaction vessel equipped with a stirring blade; a kneading machine such as a kneader, a continuous kneader, a taper roll, a single-screw extruder, a twin-screw extruder, a triple-screw extruder, a universal mixer, a plastomill, or a Votator-type kneading machine; a rotary dispersing/mixing machine such as a Homo Mixer, a static mixer, FILMIX, Ebara Milder, ClearMix, ULTRA-TURRAX, Cavitron, or a Bio Mixer; an ultrasonic dispersing apparatus; or a device having no movable part and capable of mixing by the flow of the fluid itself, such as an in-line mixer.

As the water in the emulsification step, ion-exchanged water, distilled water, or the like can be used. These waters may be used alone or in combination of two or more types thereof.

The emulsification step is preferably performed at a temperature at which water does not evaporate, and examples thereof include a range of 10°C to 90°C. The emulsification step can be performed using the same equipment as that used in the prepolymer step.

### "Chain extension step"

The chain extension step is a step of obtaining the component (A) by increasing the molecular weight of the urethane prepolymer (i) by a reaction between the isocyanate group contained in the urethane prepolymer (i) and the chain extender (a3). The temperature at the time of the chain extension step is preferably 50°C or lower from the viewpoint of productivity.

In the chain extension step, a molar ratio of the total of the hydroxyl group and the amino group contained in the chain extender (a3) to the isocyanate group contained in the urethane prepolymer (i) [(hydroxyl group and amino group)/isocyanate group] is preferably in a range of 0.8 to 1.1 and more preferably in a range of 0.9 to 1 from the viewpoint of obtaining a more excellent feel and peel strength.

### <<Optional component>>

The urethane foam layer (ii) may contain an optional component other than the component (A).

As the optional component, a surfactant, a thickener, a leveling agent, a pigment, a defoaming agent, a crosslinking agent, an emulsifier, a neutralizing agent, a film-forming aid, a urethanization catalyst, a filler, a dye, a flame retardant, an anti-blocking agent, or the like can be used. These additives may be used alone or in combination of two or more types thereof.

It is noted that when the component (A) is produced, it is preferable that the component (A) does not substantially contain an organic solvent, but an organic solvent may be added as an additive.

In addition, it is preferable that the urethane foam layer (ii) does not contain a crosslinking agent.

The urethane foam layer (ii) preferably contains the component (A), a surfactant, and a thickener.

### [Surfactant]

As the surfactant, a surfactant having a hydrophobic moiety having 10 or more carbon atoms is preferable. Specifically, as the surfactant, a long-chain carboxylate is preferable, a long-chain carboxylate having 10 to 20 carbon atoms is preferable, and a long-chain carboxylate having 14 to 20 carbon atoms is more preferable.

Specific examples of the surfactant include a long-chain carboxylic acid alkali metal salt, a long-chain carboxylic acid amine salt, a long-chain carboxylic acid ammonium salt, and the like.

As an alkali metal used as a raw material of the long-chain carboxylic acid alkali metal salt, sodium or potassium is preferable.

Examples of the amine used as a raw material of the long-chain carboxylic acid amine salt include a monoamine, an alkanolamine, a polyamine, and the like.

Examples of the monoamine include monoamines classified as a primary amine, a secondary amine, and a tertiary amine.

Specific examples of the primary amine include ethylamine, n-propylamine, butylamine, 1-ethylbutylamine, 1,3-diaminopropane, cyclohexylamine, and the like.

Specific examples of the secondary amine include diethylamine, di-n-propylamine, di-n-butylamine, 4,4'-diaminodiphenylamine, diethylenetriamine, tetraethylenepentamine, N-(2-aminoethyl)ethanolamine, morpholine, and the like.

Specific examples of the tertiary amine include dimethylethylamine, diethylmethylamine, triethylamine, tributylamine, and the like.

Specific examples of the alkanolamine include monoethanolamine, diethanolamine, triethanolamine, diethylethanolamine, propanolamine, and the like.

Specific examples of the polyamine include alkylene polyamines such as ethylenediamine, diethylenetriamine, triethylenetetramine, tetraethylenepentamine, pentaethylenehexamine, propylenediamine, dipropylenetriamine, tripropylenetetramine, tetrapropylenepentamine, pentapropylenehexamine, butylenediamine, dibutylenetriamine, tributylenetetramine, tetrabutylenepentamine, and pentabutylenehexamine; N-alkylethylenediamines such as N-methylethylenediamine, N-ethylethylenediamine, and N-propylethylenediamine; N-alkenylethylenediamines such as N-vinylethylenediamine, N-propenylethylenediamine, and N-butenylethylenediamine; and N-alkyl- or N-alkenyl-substituted alkylene polyamines such as N-alkyldiethylenetriamine, N-alkenyldiethylenetriamine, and N-alkyltriethylenetetramine; and the like.

Among the above, as the surfactant, a long-chain carboxylic acid ammonium salt having 10 to 20 carbon atoms is preferable, a long-chain carboxylic acid ammonium salt having 14 to 20 carbon atoms is more preferable, and ammonium stearate is still more preferable.

The surfactant may be used alone or in combination of two or more types thereof.

A content of the surfactant is preferably 0.01% to 30% by mass, more preferably 0.1% to 20% by mass, and still more preferably 1% to 10% by mass with respect to the total amount of solid contents constituting the urethane foam layer (ii).

### [Thickener]

Specific examples of the thickener include a cellulose thickener; an acrylic thickener; a urethane thickener; a protein thickener such as casein, sodium caseinate, and ammonium caseinate; a polyvinyl thickener such as polyvinyl alcohol, polyvinylpyrrolidone, and a polyvinylbenzyl ether copolymer; a polyether thickener such as Pluronic (registered trademark) polyether, a polyether dialkyl ester, a polyether dialkyl ether, and an epoxy-modified polyether; a maleic anhydride thickener such as a vinyl methyl ether-maleic anhydride copolymer; and a polyamide thickener such as a polyamideamine salt; and the like.

The thickener may be used alone or in combination of two or more types thereof.

A content of the thickener is preferably 0.01% to 10% by mass, more preferably 0.05% to 8% by mass, and still more preferably 0.1% to 5% by mass with respect to the total amount of solid contents constituting the urethane foam layer (ii).

### <Other layers>

The laminate according to the present embodiment may include other layers in addition to the base material (i) and the urethane foam layer (ii). Examples of the other layers include a skin layer (iii).

### <<Skin layer>>

The skin layer (iii) can be formed by a known material and a known method.

The skin layer (iii) contains, for example, a solvent-based urethane resin, a water-based urethane resin, a silicone resin, a polypropylene resin, a polyester resin, and the like.

Among the above, the skin layer (iii) preferably contains the urethane resin (A) having a nonionic group, and more preferably contains the same urethane resin as the urethane resin contained in the urethane foam layer (ii) described above.

A surface treatment layer (iv) may be further provided on the skin layer (iii) as necessary for the purpose of improving scratch resistance, imparting glossiness, and the like. Examples of a material for forming the surface treatment layer (iv) include a known water-based urethane resin, a solvent-based urethane resin, a solvent-free urethane resin, a water-based acrylic resin, a silicone resin, a polypropylene resin, a polyester resin, a vinyl chloride resin, and the like. These materials can be used alone or in combination of two or more types thereof.

### (Method for producing laminate)

Examples of the method for producing a laminate according to the present embodiment include
(X) a method including foaming the urethane resin composition to obtain a foamed liquid, coating the foamed liquid on release paper, drying the foamed liquid, and laminating the dried foamed liquid with the base material (i),
(Y) a method including foaming the urethane resin composition to obtain a foamed liquid, coating the foamed liquid on a skin layer formed on release paper, drying the foamed liquid, and laminating the dried foamed liquid with the base material (i), and
(Z) a method including foaming the urethane resin composition to obtain a foamed liquid, coating the foamed liquid on the base material (i), drying the foamed liquid, and, if necessary, laminating a skin layer (iii) formed on release paper thereon.

Examples of the method for foaming the urethane resin composition to obtain a foamed liquid include manual stirring, mechanical foaming using a mixer such as a mechanical mixer, and the like.

Among these, a method of using a mixer is preferable from the viewpoint of easily obtaining a foamed liquid. Examples of the method of using a mixer include a method of stirring at 500 to 3,000 rpm for 10 seconds to 10 minutes. In this case, from the viewpoint of obtaining a urethane foam layer (ii) having a good feel, the volume after foaming is preferably 1.2 to 7 times, and more preferably 1.3 to 2 times, the volume before foaming.

Examples of a method of applying the obtained foamed liquid onto the base material (i) or the like include a method of using a roll coater, a knife coater, a comma coater, an applicator, and the like.

Examples of a method of drying the coating material include a method of drying the coating material at a temperature of 60°C to 130°C for 30 seconds to 10 minutes.

### (Synthetic leather)

The laminate according to the above-described embodiment has immediate peelability, a soft feel, and good processability, and thus is particularly suitable for use as a synthetic leather.

### EXAMPLES

Next, the present invention will be described in more detail with reference to Examples, but the present invention is not limited to the following Examples.

### [Synthesis of urethane resin]

### <Synthesis of urethane resin (AX-1)>

1,000 parts by mass of a polyether polyol ("PTMG2000" manufactured by Mitsubishi Chemical Corporation, number average molecular weight: 2,000), 38 parts by mass of polyethylene glycol ("PEG600" manufactured by NOF Corporation, number average molecular weight: 600), and 262 parts by mass of dicyclohexylmethane diisocyanate were reacted at 100°C in the presence of 0.1 parts by mass of stannous octoate until the NCO% reached 2.8% by mass, thereby obtaining a urethane prepolymer A1.

200 parts by mass of a 20% by mass aqueous solution of sodium dodecylbenzenesulfonate ("NEOGEN S-20F" manufactured by DKS Co., Ltd.) and 467 parts by mass of water were mixed with 1,000 parts by mass of the urethane prepolymer A1 heated to 70°C to obtain an emulsified liquid.

Thereafter, a water-diluted solution of piperazine having an amino group content corresponding to 95% of the NCO group was immediately added thereto to extend the chain, and finally, a water dispersion of a urethane resin (AX-1) having a content of non-volatile matter in the urethane resin of 55% by mass was obtained.

The flow initiation temperature of the urethane resin (AX-1) was obtained by applying the urethane resin (AX-1) to release paper (coating thickness: 150 µm) and drying the urethane resin (AX-1) with a hot air dryer at 70°C for 4 minutes and then at 120°C for 2 minutes to obtain a dried product, and measuring the dried product using a flow tester "CFT-500A" (a die having a diameter of 1 mm and a length of 1 mm is used, a load is 98 N, and a temperature rising rate is 3 °C/min) manufactured by Shimadzu Corporation. As a result, the flow initiation temperature of the urethane resin (AX-1) was 180 °C.

### <Synthesis of urethane resin (AX-2)>

A water dispersion of a urethane resin (AX-2) was obtained by the same method as in <Synthesis of urethane resin (AX-1)> described above, except that the polyether polyol was changed to a polycarbonate polyol ("ETERNACOLL UH-100" manufactured by UBE Corporation, number average molecular weight: 1,000).

The flow initiation temperature of the urethane resin (AX-2) measured by the same method as described above was 175°C.

### <Synthesis of urethane resin (AX-3)>

A water dispersion of a urethane resin (AX-3) was obtained by the same method as in <Synthesis of urethane resin (X-1)> described above, except that the polyether polyol was changed to a polyester polyol ("PLACCEL 210" manufactured by Daicel Corporation, number average molecular weight: 1,000).

The flow initiation temperature of the urethane resin (AX-3) measured by the same method as described above was 160°C.

### <Synthesis of urethane resin (X-4)>

1,000 parts by mass of a polyether polyol ("PTMG2000" manufactured by Mitsubishi Chemical Corporation, number average molecular weight: 2,000), 38 parts by mass of polyethylene glycol ("PEG600" manufactured by NOF Corporation, number average molecular weight: 600), and 262 parts by mass of dicyclohexylmethane diisocyanate were reacted at 100°C in the presence of 0.1 parts by mass of stannous octoate until the NCO% reached 2.8% by mass, thereby obtaining a urethane prepolymer A1.

200 parts by mass of a 20% by mass aqueous solution of sodium dodecylbenzenesulfonate ("NEOGEN S-20F" manufactured by DKS Co., Ltd.) and 467 parts by mass of water were mixed with 1,000 parts by mass of the urethane prepolymer A1 heated to 70°C to obtain an emulsified liquid.

Thereafter, a water-diluted solution of piperazine having an amino group content corresponding to 75% of the NCO group was immediately added thereto to extend the chain, and finally, a water dispersion of a urethane resin (X-4) having a content of non-volatile matter in the urethane resin of 55% by mass was obtained.

The flow initiation temperature of the urethane resin (X-4) measured by the same method as described above was 130°C.

### <Preparation of urethane resin (X-5)>

As a urethane resin (X-5), an ether-based PUD "HYDRAN WLS-120AR" (manufactured by DIC Corporation) was prepared.

The flow initiation temperature of the urethane resin (X-5) measured by the same method as described above was 160°C.

### <Synthesis of urethane resin (X-6) for adhesive layer>

1,000 parts by mass of a polyether polyol ("PTMG1000" manufactured by Mitsubishi Chemical Corporation, number average molecular weight: 1,000), 50 parts by mass of 2,2'-dimethylolpropionic acid, and 175 parts by mass of isophorone diisocyanate were reacted at 70°C in the presence of 1,225 parts by mass of methyl ethyl ketone and 0.1 parts by mass of stannous octoate until the solution viscosity reached 20,000 mPa·s, and then 3 parts by mass of methanol was added thereto to stop the reaction, thereby obtaining a methyl ethyl ketone solution of an anionic urethane resin. 61 parts by mass of polyoxyethylene distyrenated phenyl ether and 38 parts by mass of triethylamine were mixed with the urethane resin solution, and then 2,450 parts by mass of ion-exchanged water was added thereto to perform phase inversion emulsification, thereby obtaining an emulsified liquid in which the urethane resin was dispersed in water. Next, methyl ethyl ketone was distilled off from the emulsified liquid to obtain a water dispersion of a urethane resin (X-6) having a content of non-volatile matter of 50% by mass.

### [Method for producing laminate]

### <Laminate of Example 1>

### · Production of composition for skin layer

100 g of a water dispersion of urethane resin (AX-1), 2.0 g of a thickener (Borch Gel ALA; manufactured by Borchers GmbH), 0.1 g of a leveling agent (TEGO Flow 425; manufactured by Evonik Industries AG), 0.1 g of a defoaming agent (TEGO Twin 4000; manufactured by Evonik Industries AG), and 10 g of a black pigment (DILAC HS-9550; manufactured by DIC Corporation) were stirred at 2,000 rpm for 2 minutes with a mechanical mixer. Next, the mixture was defoamed using a vacuum defoaming machine to produce a composition X1 for a skin layer.

### · Production of composition for foam layer

100 g of a water dispersion of a urethane resin (AX-1), 2.0 g of a thickener (Borch Gel ALA; manufactured by Borchers GmbH), and 3.0 g of a surfactant (ammonium stearate) were stirred at 2,400 rpm with a mechanical mixer, and air was incorporated thereinto to produce a composition X1 for a foam layer having a volume of 150% with respect to the initial volume.

### · Production of laminate of Example 1

The composition X1 for a skin layer was applied onto release paper (EK-100D; manufactured by Lintech Co., Ltd.) with a knife coater (coating thickness: 100 µm), and then a skin layer was formed with a hot air dryer (drying conditions: 70°C × 2 min, 120°C × 2 min). The composition X1 for a foam layer was applied onto the skin layer with a knife coater (coating thickness: 600 µm) to form a foam layer. Next, a base material (thermoplastic urethane (TPU)) was pressure-bonded to the foam layer to bond the foam layer and the base material. Thereafter, the laminate was dried at 120°C for 4 minutes to obtain a laminate (synthetic leather) of Example 1.

The dry density of the urethane foam layer in the laminate of Example 1 was 630 kg/m³.

The dry density of the urethane foam layer is a value obtained by dividing a value obtained by subtracting a weight of the base material per 10 cm square from a weight of the laminate of Example 1 per 10 cm square by a thickness of the urethane foam layer (the same applies hereinafter).

### <Laminate of Example 2>

A laminate of Example 2 was produced by the same production method as in <Laminate of Example 1>, except that the water dispersion of the urethane resin (AX-1) in the composition X1 for a skin layer and the composition X1 for a foam layer was changed to a water dispersion of a urethane resin (AX-2).

The dry density of the urethane foam layer in the laminate of Example 2 was 520 kg/m³.

### <Laminate of Example 3>

A laminate of Example 3 was produced by the same production method as in <Laminate of Example 1>, except that the water dispersion of the urethane resin (AX-1) in the composition X1 for a skin layer and the composition X1 for a foam layer was changed to a water dispersion of a urethane resin (AX-3).

The dry density of the urethane foam layer in the laminate of Example 3 was 780 kg/m³.

### <Laminate of Comparative Example 1>

A laminate of Comparative Example 1 was produced by the same production method as in <Laminate of Example 1>, except that the water dispersion of the urethane resin (AX-1) in the composition X1 for a skin layer and the composition X1 for a foam layer was changed to a water dispersion of a urethane resin (X-4).

The dry density of the urethane foam layer in the laminate of Comparative Example 1 was 600 kg/m³.

### <Laminate of Comparative Example 2>

A laminate of Comparative Example 2 was produced by the same production method as in <Laminate of Example 1>, except that the water dispersion of the urethane resin (AX-1) in the composition X1 for a skin layer was changed to a water dispersion of a urethane resin (X-5), the water dispersion of the urethane resin (AX-1) in the composition X1 for a foam layer was changed to a water dispersion of a urethane resin (X-5), and 4.0 g of a crosslinking agent (CARBODILITE SV-02; manufactured by Nisshinbo Chemical Inc.) was further blended.

### <Laminate of Comparative Example 3>

A laminate of Comparative Example 3 was produced by the same production method as in <Laminate of Example 1>, except that the water dispersion of the urethane resin (AX-1) in the composition X1 for a skin layer and the composition X1 for a foam layer was changed to a water dispersion of a urethane resin (X-5).

### <Laminate of Comparative Example 4>

### · Production of composition for adhesive layer

100 g of a water dispersion of a urethane resin (X-6), 0.1 g of a defoaming agent (Tego Foamex 800; manufactured by Evonik Industries AG), and 1.0 g of a thickener (Borch Gel 0620; manufactured by Borchers GmbH) were stirred at 2,000 rpm for 2 minutes with a mechanical mixer, and then defoamed using a vacuum defoaming machine to produce a composition (X-6) for an adhesive layer.

### · Production of laminate of Comparative Example 4

The composition X1 for a skin layer was applied onto release paper (EK-100D; manufactured by Lintech Co., Ltd.) with a knife coater (coating thickness: 100 µm), and then a skin layer was formed with a hot air dryer (drying conditions: 70°C × 2 min, 120°C × 2 min). The composition X1 for a foam layer was applied onto the skin layer with a knife coater (coating thickness: 600 µm) to form a foam layer (drying conditions: 70°C × 2 min, 120°C × 2 min). Next, the composition (X-6) for an adhesive layer was applied onto the foam layer with a knife coater (coating thickness was adjusted such that the coating film thickness was 50 µm in a case of being dried), and then an adhesive layer was formed with a hot air dryer (drying conditions: 90°C for 3 minutes). A base material (thermoplastic urethane (TPU)) was placed on the adhesive layer and bonded under conditions of a temperature of 100°C, a pressure of 7.5 MPa, and a feeding speed of 0.5 m/min with a laminator to obtain a laminate of Comparative Example 4.

### <Laminate of Comparative Example 5>

The composition X1 for a skin layer was applied onto release paper (EK-100D; manufactured by Lintech Co., Ltd.) with a knife coater (coating thickness: 100 µm), and then a skin layer was formed with a hot air dryer (drying conditions: 70°C × 2 min, 120°C × 2 min). The composition X1 for a foam layer was applied onto the skin layer with a knife coater (coating thickness: 600 µm) to form a foam layer (drying conditions: 70°C × 2 min, 120°C × 2 min). Next, the composition (X-6) for an adhesive layer was applied onto the foam layer with a knife coater (coating thickness was adjusted such that the coating film thickness was 50 µm in a case of being dried), and then a base material (thermoplastic urethane (TPU)) was placed on the adhesive layer and bonded under conditions of a temperature of 25°C, a pressure of 5 MPa, and a feeding speed of 0.5 m/min with a laminator. Furthermore, the adhesive layer was dried using a hot air dryer (drying conditions: 120°C × 2 min) to obtain a laminate of Comparative Example 5.

### [Evaluation of peel strength]

A hot-melt tape (BW-2, manufactured by SANKA SEIKEN Co., Ltd.) having a width of 2.5 cm was placed on a surface of the laminate (surface of the skin layer) and heat-pressed at 150°C for 30 seconds to adhere the hot-melt tape. The laminate was cut along the width of the hot-melt tape. The base material and the hot-melt tape were clamped with a chuck, and the base material and the foam layer of the cut laminate were peeled off, and the peel strength was measured with an autograph (manufactured by Shimadzu Corporation). An average value of the obtained data was determined, converted into a width of 1 cm, and the peel strength was evaluated according to the following standard. The results are shown in Tables 1 and 2.
A: 3 kgf/cm or more
B: 1.5 or more and less than 3 kgf/cm
C: less than 1.5 kgf/cm

### [Evaluation of immediate peelability]

The peel strength of the laminate of each example immediately after the production and after aging (heating at 60°C for one week) was measured, and the immediate peelability was evaluated according to the following standard. The results are shown in Tables 1 and 2.
A: difference in peel strength was less than 0.5 kgf/cm.
B: difference in peel strength was 0.5 kgf/cm or more.

### [Evaluation of hydrolysis resistance]

The laminate of each example was allowed to stand under humid heat conditions of 70°C and 95 %RH for 3 weeks, and the hydrolysis resistance was evaluated according to the following standard. The results are shown in Tables 1 and 2.
A: no abnormality was observed in the appearance.
B: change in glossiness was observed in the appearance and/or stickiness was observed in the tactile sensation.

### [Evaluation of processability]

The laminate of each example was subjected to embossing treatment. Next, the appearance of the laminate of each example was compared, and whether the pattern was transferred more clearly was observed with a scanning electron microscope (SEM), and the processability was evaluated according to the following standard. The results are shown in Tables 1 and 2.
A: the embossed pattern was clearly transferred, and it was possible to confirm that the pattern was sharp in the SEM observation.
B: the embossed pattern was not clearly transferred, and it was possible to confirm that the pattern was not sharp in the SEM observation.

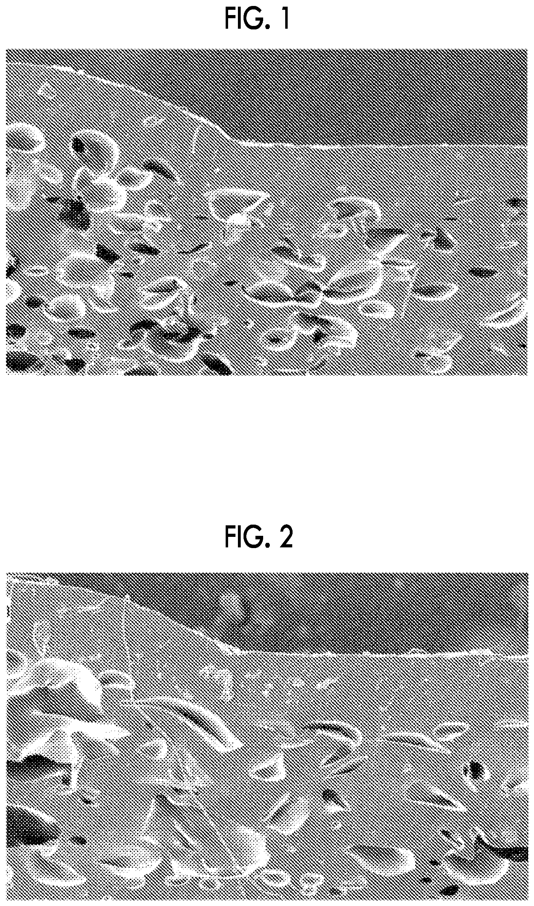

FIG. 1 shows an SEM image of the laminate of Example 1.

FIG. 2 shows an SEM image of the laminate of Comparative Example 2.

### [Evaluation of feel]

The feel of the laminate of each example was evaluated by tactile sensation.
A: flexible and soft.
B: inferior in flexibility and hard.

**[Table 1]**

| | Example 1 | Example 2 | Example 3 |
|---|---|---|---|
| Resin | AX-1 | AX-2 | AX-3 |
| Flow initiation temperature °C | 180 | 175 | 160 |
| Peel strength | A | A | A |
| Immediate peelability | A | A | A |
| Hydrolysis resistance | A | A | A |
| Processability | A | A | A |
| Feel | A | A | A |

**[Table 2]**

| | Comparative Example 1 | Comparative Example 2 | Comparative Example 3 | Comparative Example 4 | Comparative Example 5 |
|---|---|---|---|---|---|
| Resin | X-4 | X-5 (+crosslinking agent) | X-5 | AX-1 | AX-1 |
| Flow initiation temperature °C | 130 | 200 | 160 | 180 | 180 |
| Peel strength | C | A | B | A | A |
| Immediate peelability | A | A | A | B | B |
| Hydrolysis resistance | B | A | B | A | A |
| Processability | A | B | A | B | B |
| Feel | A | A | A | B | B |

As shown in Tables 1 and 2, in the laminate of Examples, all of the evaluation results of the peel strength, the immediate peelability, the hydrolysis resistance, the processability, and the feel were good as compared with the laminate of Comparative Examples.

Therefore, it was confirmed that the laminate of Examples had immediate peelability, a soft feel, and good processability.

Although preferred examples of the present invention have been described above, the present invention is not limited to these examples. Additions, omissions, substitutions, and other modifications of the configuration can be made without departing from the spirit of the present invention. The present invention is not limited by the above description, but is limited only by the scope of the appended claims.

## Claims

1. A laminate comprising:
a base material (i); and
a urethane foam layer (ii),
wherein the urethane foam layer (ii) is in direct contact with the base material (i),
the urethane foam layer (ii) contains a urethane resin (A) having a nonionic group, and
a flow initiation temperature of the urethane resin (A) is higher than 130°C.

2. The laminate according to claim 1,
wherein the flow initiation temperature of the urethane resin (A) is 150°C or higher.

3. The laminate according to claim 1 or 2,
wherein the urethane resin (A) is a urethane resin using, as raw materials, a polyisocyanate and one or more polyols selected from the group consisting of a polyether polyol, a polycarbonate polyol, and a polyester polyol.

4. The laminate according to claim 1 or 2,
wherein the urethane foam layer (ii) further contains a surfactant.

5. The laminate according to claim 4,
wherein the surfactant is a long-chain carboxylate.

6. The laminate according to claim 1 or 2,
wherein a dry density of the urethane foam layer (ii) is 200 to 1,000 kg/m³.

7. A synthetic leather comprising:
the laminate according to claim 1 or 2.
